# EUROPÄISCHE PATENTANMELDUNG

(11) **EP 3 671 036 A1**
(43) Veröffentlichungstag der Anmeldung: **24.06.2020**
(21) Anmeldenummer: 19216760.9
(22) Anmeldetag: 17.12.2019
(51) Int. Cl.: F21V 33/00, F21S 8/04, F24D 3/16, F21V 5/00, F21Y 115/10, F21Y 105/10, F21W 131/407

(54) **STRAHLFLÄCHENAUFBAU MIT HOCHVOLT-LEDS**

(30) Priorität: 19.12.2018 DE 102018222327
(71) Anmelder: Frenger Systemen BV Heiz- und Kühltechnik GmbH, 64823 Gross-Umstadt (DE)
(72) Erfinder: Dr.-Ing Menge, Klaus, 64823 Groß-Umstadt (DE)
(74) Vertreter: Leske, Thomas

(57) **Zusammenfassung**

Es wird ein Strahlenflächenaufbau in der Art einer Deckenstrahlleuchte 1 zur Heizung und Beleuchtung eines Raumes, insbesondere einer Sporthalle, bereitgestellt. Die Deckenstrahlleuchte 1 weist eine Hochvolt-LED-Lichtquelle 2 auf, welche in einem Leuchtengehäuse 3 angeordnet ist. Die dem zu beheizenden Raum zugewandte Abstrahlseite 4 des Leuchtengehäuses 3 ist durch eine lichtdurchlässige Scheibenabdeckung 5 in Form einer Mikroprismenscheibe 6 ausgebildet. Die Scheibenabdeckung 5 strahlt das Licht der Lichtquelle 2, ohne dass ein Rastergitter angeordnet sein muss, blendfrei ab, ist zusätzlich gegen Ballwurf durch den Einsatz der Mikroprismenscheibe 6 splittersicher ausgebildet und kapselt die Hochvolt-LED-Lichtquelle 2 gegen freien Zugriff im Leuchtengehäuse 3.

## Beschreibung

Die Erfindung betrifft einen Strahlflächenaufbau mit integrierter Deckenstrahlleuchte zur Heizung und Beleuchtung eines Raumes, insbesondere einer Sporthalle, gemäß Oberbegriff von Anspruch 1.

Strahlflächenaufbauten, in welche Deckenstrahlleuchten integriert sind, sind bekannt. Sie dienen zur Heizung und Beleuchtung eines höheren Raumes, wie beispielsweise einer Sporthalle. Zunehmend werden diese Strahlflächenaufbauten bzw. Deckenstrahlleuchten mit einer Hochvolt-LED-Lichtquelle ausgestattet. Aus sicherheitstechnischen Gründen müssen diese Hochvolt-LED-Lichtquellen vor äußerem Zugriff gesichert sein. D. h. diese Strahlflächenaufbauten müssen so ausgebildet sein, dass beispielsweise beim Montieren oder beim Ausführen von Reinigungsarbeiten Personen, welche diese Arbeiten ausführen, nicht an die Hochvolt-LED-Lichtquellen heranlangen können. Gegenüber früher eingesetzten Niedervolt-LED-Lichtquellen haben die Hochvolt-LED-Lichtquellen den Vorteil, dass eine höhere Lichtausbeute zur Verfügung steht, was insbesondere bei höheren Räumen wie beispielsweise einer Sporthalle von Bedeutung ist. Bei Niedervolt-LED-Lichtquellen ist es meist ausreichend, ein Rastergitter an der Deckenstrahlleuchte vorzusehen, welches im Wesentlichen in der Abstrahlebene der Deckenstrahlleuchte angeordnet ist. Dieses Rastergitter dient vor allen Dingen dazu, Blendungen durch die Lichtquelle zu vermeiden aber auch um die Lichtquelle von Ballwürfen zu schützen. Bei Hochvolt-LED-Lichtquellen reichen die Rastergitter nicht aus, um die Deckenstrahlleuchten für die verschiedensten Blickwinkel blendfrei zu gestalten.

Um eine blendfreie Deckenstrahlleuchte auch bei Hochvolt-LED-Lichtquellen auszubilden, werden beispielsweise Milchglasscheiben eingesetzt, welche ähnlich wie die Rastergitter in der Abstrahlebene der Deckenstrahlleuchte angebracht sind. Der Nachteil derartiger Milchglasscheiben besteht allerdings darin, dass der Vorteil der höheren Lichtausbeute der Hochvolt-LED-Lichtquellen durch eine beschränkte oder eingeschränkte Lichtdurchlässigkeit durch die Milchglasscheiben zumindest in nicht unerheblichem Maße wieder kompensiert wird. Dies trifft umso mehr zu, als bei einem Einsatz in Sporthallen die Milchglasscheiben eine gewisse Mindestdicke aufweisen müssen, damit Ballwürfe diese Scheiben nicht beschädigen, d. h. nicht zersplittern. Wenn durch Ballwürfe derartige Scheiben zersplittern, dann besteht zum einen Verletzungsgefahr, weil die Splitter zu Boden in die Sporthalle fallen, zum anderen wird dadurch aber für eine spätere Reparatur eine gegebenenfalls eingesetzte Hochvolt-LED-Lichtquelle frei zugänglich.

Um die Lichtausbeute von derartigen Deckenstrahlleuchten näher an die Möglichkeiten der Hochvolt-LED-Lichtquelle heranzuführen, d. h. zu steigern, sind sogenannte Prismenscheiben entwickelt worden, welche im Innern lichtreflektierende Partikel in Form von Prismen aufweisen, um durch eine derartige Scheibe hindurchtretendes Licht wieder stärker in Abstrahlrichtung zum Ausleuchten des zu beleuchtenden und zu beheizenden Raumes zu richten. Der Nachteil derartiger Standardprismenscheiben besteht aber darin, dass diese nicht splittersicher sind, weil es in einer derartigen Prismenscheibe offensichtlich durch das Einbauen der lichtreflektierenden Prismen Sollbruchstellen gibt.

Der vorliegenden Erfindung liegt daher die Aufgabe zugrunde, einen Strahlflächenaufbau mit integrierter Deckenstrahlleuchte zu schaffen, welche die Vorteile einer Hochvolt-LED-Lichtquelle zum Abstrahlen einer hohen Lichtintensität nutzt, das Licht blendfrei abstrahlt und welcher sicher gegen Splittern bei Ballwürfen ist sowie zusätzlich einen Zugriff zu der Hochvolt-LED-Lichtquelle bei beispielsweise Wartungs- und Reinigungsarbeiten an einer derartigen Deckenstrahlleuchte verhindert.

Diese Aufgabe wird durch einen Strahlflächenaufbau mit integrierter Deckenstrahlleuchte mit den Merkmalen gemäß Anspruch 1 gelöst. Zweckmäßige Weiterbildungen sind in den abhängigen Ansprüchen definiert.

Gemäß der Erfindung weist der Strahlflächenaufbau mit integrierter Deckenstrahlleuchte bzw. ein eine Mehrzahl von Deckenstrahlleuchten aufweisender Strahlflächenaufbau, welcher zur Heizung und Beleuchtung eines Raumes, insbesondere einer Sporthalle, dient, eine Hochvolt-LED-Lichtquelle auf, welche in einem Leuchtengehäuse angeordnet ist. Das Leuchtengehäuse weist eine Abstrahlseite auf, welche auf den Raum zugewandt ist und welche durch eine lichtdurchlässige Scheibenabdeckung gebildet ist.

Gemäß der Erfindung strahlt die Scheibenabdeckung Licht der Lichtquelle ohne Rastergitter blendfrei ab, ist gegen Ballwurf splittersicher als Mikroprismenscheibe ausgebildet und kapselt die Hochvolt-LED-Lichtquelle gegen freien Zugriff im Leuchtengehäuse. Durch diese Kombination von Merkmalen wird eine gegenüber dem Stand der Technik bezüglich der Lichtabstrahlung hoch effiziente Deckenstrahlleuchte gebildet, welche trotz hoher Lichtausbeute wegen einer hohen Transmission des Lichtes durch die Mikroprismenscheibe das Licht blendfrei abstrahlt. Zusätzlich ist die Mikroprismenscheibe splittersicher ausgebildet, d. h. bei Ballwurf wird sie nicht beschädigt, so dass ein freier Zugriff auf die Hochvolt-LED-Lichtquelle ausgeschlossen ist. Die als Mikroprismenscheibe ausgebildete Scheibenabdeckung ist so an der Abstrahlseite des Leuchtengehäuses der Deckenstrahlleuchte angebracht, dass vorzugsweise nur mit einem speziellen Werkzeug diese Scheibenabdeckung entfernt werden kann.

Die im Stand der Technik bekannten Standardprismenscheiben weisen größere Kristalle in ihrem Inneren auf, was zum einen zu einem inhomogenen Lichtbild im zu beleuchtenden Raum führt, was aber auch inhärent dazu führt, dass vermutlich an den Kanten der das Licht reflektierenden und streuenden Kristalle Sollbruchstellen vorhanden sind.

Überraschenderweise hat sich nun gezeigt, dass eine Minimierung der in der Mikroprismenscheibe enthaltenen Kristalle hinsichtlich ihrer Größe weder die Transmission von Licht durch die Mikroprismenscheibe bei Beibehaltung eines blendfreien Zustandes nachteilig beeinflusst, sondern außerdem splittersicher gegen Ballwurf ist, was bedeutet, dass die Mikroprismenscheibe das bei Standardprismenscheiben vorhandene Problem der Sollbruchstellen überwindet. Damit erfüllt eine Mikroprismenscheibe für erfindungsgemäße Strahlflächenaufbauten in der Art einer Deckenstrahlleuchte mehrere Funktionalitäten.

Die Verwendung von Mikroprismen in einer vorzugweise aus Polycarbonat bestehenden Mikroprismenscheibe beinhaltet inhärent des Weiteren ein hochgradig gleichmäßiges Abstrahlen von Licht von einer jeweiligen Deckenstrahlleuchte des erfindungsgemäßen Strahlflächenaufbaus. Da diese Scheibenabdeckung in Form einer Mikroprismenscheibe splittersicher gegen Ballwürfe ist, ist eine von einem Ball ansonsten resultierende Beschädigung ausgeschlossen, so dass eben auch ein Zugriff in das Innere des Leuchtengehäuses, in welchem die Hochvolt-LED-Lichtquelle angeordnet ist, nicht ohne spezielles Werkzeug beispielsweise bei Reinigungsarbeiten möglich ist. Die Mikroprismenscheibe ist in der Ebene der Abstrahlseite der Deckenstrahlleuchte angeordnet und kapselt die Hochvolt-LED-Lichtquelle, welche im Innern des Leuchtgehäuses angeordnet ist, vollständig.

Sollten zukünftig Niedervolt-LED-Lichtquellen bezüglich ihrer Lichtausbeute so weiterentwickelt werden, dass sie diesbezüglich qualitativ ähnlich hochwertig wie die Hochvolt-LED-Lichtquellen sind, soll auch deren Einsatz bei den erfindungsgemäßen Deckenstrahlleuchten mit abgedeckt sein und deren Prinzipien und Merkmale gleichermaßen gelten.

Als Material für die splittersichere Mikroprismenscheibe wird vorzugsweise Polycarbonat eingesetzt und zwar UV-stabilisiertes transparentes Polycarbonat. Dabei wird ein Polycarbonat eingesetzt, das eine Zugfestigkeit bzw. Bruchspannung, welche gemäß ISO 527-1/-2 im Bereich zwischen 60 und 70 MPa liegt. Die sogenannte Charpy-Kerbschlagzähigkeit bei 23°C liegt im Bereich von 70 kJ/m² (gemessen nach ISO 179/1eA/7391). Diese beispielhaft hier erwähnten Materialwerte sind bei Standardprismenscheiben nicht erreichbar.

Mit dem erfindungsgemäßen Strahlflächenaufbau mit integrierter Deckenstrahlleuchte ist es nun erstmals möglich, eine Deckenstrahlleuchte mit einer eine hohe Lichtausbeute aufweisenden Hochvolt-LED-Lichtquelle einzusetzen, welche trotz Scheibenabdeckung zur Kapselung der Hochvolt-LED-Lichtquelle gegen freien Zugriff im Leuchtengehäuse eine hohe Lichtabstrahlung und ein gleichmäßiges Ausleuchten des zu beleuchtenden Raumes aufweist.

Vorzugsweise weist die Scheibenabdeckung eine Dicke im Bereich von 2 bis 4 mm auf. Überraschenderweise hat sich nämlich gezeigt, dass eine derartig relativ geringe Dicke ausreicht, dass selbst bei kräftigen Ballaufschlägen auf einer derartigen Scheibenabdeckung ein Zersplittern der Mikroprismenscheibe nicht auftritt.

Gemäß einer weiteren bevorzugten Ausbildung ist die Scheibenabdeckung mit einer längsseitigen Winkelschiene und einer kopfseitigen Schraubenbefestigung im Leuchtengehäuse der Deckenstrahlleuchte gehalten. Dadurch ist es ohne den Einsatz von Werkzeug einem Personal zum Reparieren oder zum Reinigen der Deckenstrahlleuchte nicht möglich, einen freien Zugriff zur Hochvolt-LED-Lichtquelle im Innern des Leuchtengehäuses zu bekommen. Der Sicherheitsaspekt kann dadurch zuverlässig gewährleistet werden.

Vorzugsweise weist die Mikroprismenscheibe scharfkantige Mikrokristalle auf, so dass Sollbruchstellen an deren Kanten nicht mehr auftreten. Die Scharfkantigkeit der Mikrokristalle ist erforderlich, damit eine entsprechende Abstrahlintensität einschließlich einer Vergleichmäßigung des Beleuchtungsbildes des zu beleuchtenden Raumes gewährleistet wird, dass andererseits aber die Mikrokristalle so klein sind, dass die eigentliche Festigkeit bzw. die feste Verbindung des Polycarbonates mit den Mikrokristallen gewährleistet ist.

Vorzugsweise ist gemäß einem weiteren Ausführungsbeispiel die Hochvolt-LED-Lichtquelle mit ihren LEDs in zumindest zwei Reihen nebeneinander angeordnet, wobei vorzugsweise zwischen den LED-Reihen ein Steg zur Stabilisierung der Scheibenabdeckung angeordnet ist. Dieser Steg, welcher die beiden LED-Reihen separiert, weist eine Höhe auf, welche sich bis in die Ebene erstreckt, welche die Abstrahlseite der Deckenstrahlleuchte bildet. Die Scheibenabdeckung bzw. die Mikroprismenscheibe ist damit über den Steg noch zusätzlich abgestützt. Bei Aufschlägen von Bällen wird dadurch zusätzlich ein Splittern oder Zerbersten der Mikroprismenscheibe verhindert.

Aufgrund der speziellen Gestaltung der Prismenscheibe mit Mikroprismen in ihrem Innern ist es möglich, dass die Deckenstrahlleuchte einen vereinheitlichten Blendungsbewertungsfaktor (UGR) von < 22 aufweist. Dieser Wert bedeutet, dass eine hohe Blendfreiheit allein durch die Mikroprismenscheibe, eben ohne das Vorsehen eines Rastergitters, möglich ist.

Gemäß einer vorteilhaften Ausführungsform ist das Leuchtengehäuse aus verzinktem Stahlblech ausgebildet, so dass auch bei längerer Einsatzdauer ein Rosten des Gehäuses vermieden, jedenfalls aber stark hinausgezögert wird und dadurch die Lebensdauer einer derartigen erfindungsgemäßen Deckenstrahlleuchte erhöht wird.

Weitere Details und Anwendungsmöglichkeiten der vorliegenden Erfindung werden nun in der nachfolgenden Zeichnung detailliert erläutert. In der Zeichnung zeigen:
- Figur 1: eine perspektivische Detailansicht einer Deckenstrahlleuchte mit Hochvolt-LED-Lichtquelle mit Blickrichtung von unten;
- Figur 2: eine Querschnittsansicht durch die erfindungsgemäße Deckenstrahlleuchte gemäß Figur 1;
- Figur 3: eine Unteransicht der erfindungsgemäßen Deckenstrahlleuchte gemäß Figuren 1 und 2; und
- Figur 4: eine Seitenschnittansicht der erfindungsgemäßen Deckenstrahlleuchte gemäß den Figuren 1 und 2.

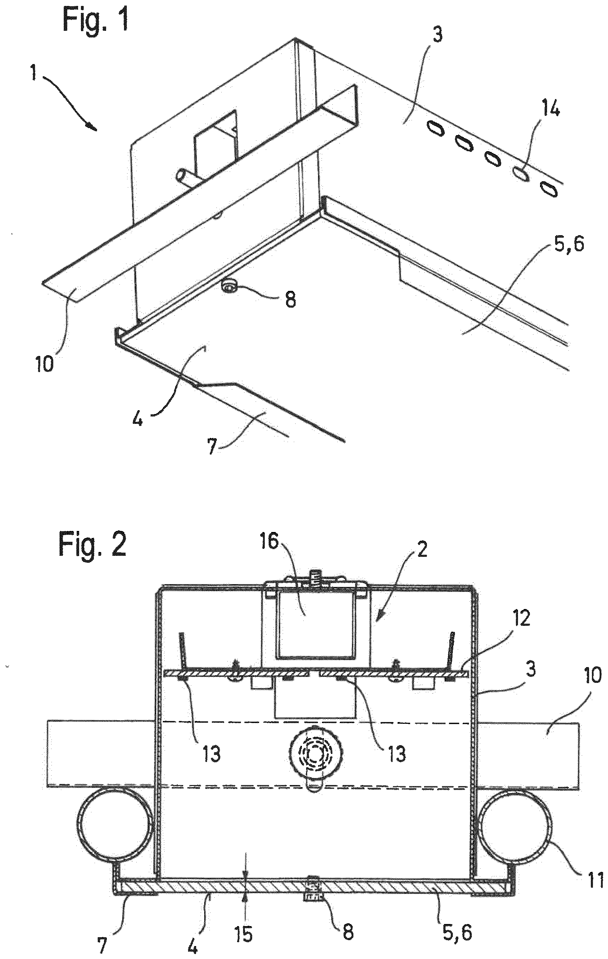

Figur 1 zeigt eine perspektivische Teilansicht einer Deckenstrahlleuchte 1, welche ein kastenartig ausgebildetes Leuchtengehäuse 3 aufweist. Innerhalb des Leuchtengehäuses 3 ist eine in Figur 1 nicht dargestellte Hochvolt-LED-Lichtquelle 2 angeordnet, mittels welcher Licht durch eine Scheibenabdeckung 5 abstrahlbar ist, welche Teil einer Deckenstrahlleuchte ist. Die Scheibenabdeckung ist an der dem zu beheizenden Raum zugewandten Unterseite der Deckenstrahlleuchte 1 angeordnet und ist als Mikroprismenscheibe 6 (nicht gesondert dargestellt) ausgebildet. Die Mikroprismenscheibe 6 schließt das Leuchtengehäuse 3 nach unten ab, so dass die Hochvolt-LED-Lichtquelle 2 mittels der Scheibenabdeckung 5 bzw. Mikroprismenscheibe 6 gekapselt ist. Die untere, auf den zu beheizenden Raum weisende Seite der Scheibenabdeckung 6 stellt die Abstrahlseite 4 der Deckenstrahlleuchte 1 dar.

Da bei Deckenstrahlleuchten 1 mit Hochvolt-LED-Lichtquellen 2 sichergestellt werden muss, dass Personen, welche sich im Bereich der Deckenstrahlleuchte 1 aufhalten oder diese reinigen oder diese reparieren, nicht in Kontakt mit der Hochvolt-LED-Lichtquelle gelangen können, ist das Leuchtengehäuse 3 der Deckenstrahlleuchte 1 mittels der Scheibenabdeckung 5 bzw. Mikroprismenscheibe 6 derart gekapselt, dass die Scheibenabdeckung 5 an ihren Längsseiten mittels einer Längsschiene 7 gehalten ist, welche den Rand der Scheibenabdeckung 5 überdeckt. Zusätzlich ist die Scheibenabdeckung 5 an der Stirnseite mittels einer Schraubenbefestigung arretiert. Damit ist es nicht ohne weiteres möglich, ungewollt an die Hochvolt-LED-Lichtquelle 2 zu gelangen. Das Leuchtengehäuse 3 weist an seiner oberen, der Decke zugewandten Seite, an welcher die Deckenstrahlleuchte 1 in der Regel aufgehängt ist, Lüftungslöcher 14 auf, welche der Zirkulation der innerhalb des Leuchtengehäuses 3 erwärmten Luft dient. An der Stirnseite der Deckenstrahlleuchte 1 ist eine Winkelhalterung 10 angeordnet, welche in Figur 1 nicht dargestellte Heizrohre auf deren Oberseite festlegt, wobei die Heizrohre 11 gleichzeitig in eine abgekantete Längsschiene im Bereich der Scheibenabdeckung 5 gedrückt werden.

In Figur 2 ist eine Querschnittsansicht der Deckenstrahlleuchte 1 gezeigt, bei welcher das Leuchtengehäuse 3 im Querschnitt etwa quadratisch ausgebildet ist und in seinem oberen Bereich eine für die Hochvolt-LED-Lichtquelle erforderliche Elektronik 16 aufweist, welche in einem in das Leuchtengehäuse 3 integrierten kastenartigen Element angeordnet ist. An der äußeren, in das Innere des Leuchtengehäuses 3 weisenden Unterseite des kastenartigen Kanalelements, in welcher die Elektronik 16 der Hochvolt-LED-Lichtquelle untergebracht ist, ist eine LED-Platine 12 angeordnet, welche an einem wannenartig ausgebildeten Winkelprofil mittels Schrauben befestigt ist, welches an der in das Leuchtengehäuse 3 weisenden Unterseite des kanalartigen Elements für die Elektronik 16 angebracht ist und seinerseits an seiner Unterseite die LED-Platine 12 trägt, welche ihrerseits mit den LEDs 13 bestückt ist.

Im dargestellten Beispiel ist eine Anordnung der LEDs in vier in Längsrichtung der Deckenstrahlleuchte 1 sich erstreckenden Reihen von LEDs vorgesehen. An der Unterseite des Leuchtengehäuses 3 ist eine Scheibenabdeckung 5 in Form einer Mikroprismenscheibe 6 angeordnet, welche mit ihrer Abstrahlseite 4 in Richtung auf den zu beheizenden Raum weist. Die Scheibenabdeckung 5 weist eine Dicke 15 auf, welche gering, d. h. dünn genug ist, wenig Licht zu absorbieren, um eine hohe Lichtausbeute der Hochvolt-LED-Lichtquelle zu erhalten, aber auf jeden Fall fest genug, dass sie bei gegebenenfalls auftretenden Balltreffern beispielsweise in einer Sporthalle nicht zersplittert. Die Scheibenabdeckung 5 ist an ihren äußeren Rändern mittels einer Längsschiene 7 gehalten, welche seinerseits einen nach oben weisenden profilierten Abschnitt aufweist, zwischen dessen Ende und der Unterseite der Winkelhalterung 10 auf jeder Seite des Leuchtengehäuses 3 ein Heizrohr 11 festlegt ist. Die Heizrohre 11 werden mittels eines Heizmediums durchströmt, um dessen Energie im Wege der Strahlung an den zu beheizenden Raum abzugeben. Die Längsschiene 7 und die Schraubbefestigung 8 halten die Scheibenabdeckung 5 arretiert bezüglich des Leuchtengehäuses 3, so dass ein einfacher Zugang zu den Hochvolt-LED-Lichtquellen durch Kapseln des Leuchtengehäuses 3 verhindert wird. Die Längsschiene 7 wie auch die Winkelhalterung 10 sind durch ihre direkte materailmäßige Verbindung mit dem aus Stahlbleich ausgebildeten Leuchtengehäuse 3 verbunden und wirken daher als Strahlflächen, über welche Strahlungsenergie an den zu beheizenden Raum von der Abstrahlseite 4 der Deckenstrahlleuchte 1 abgebbar ist.

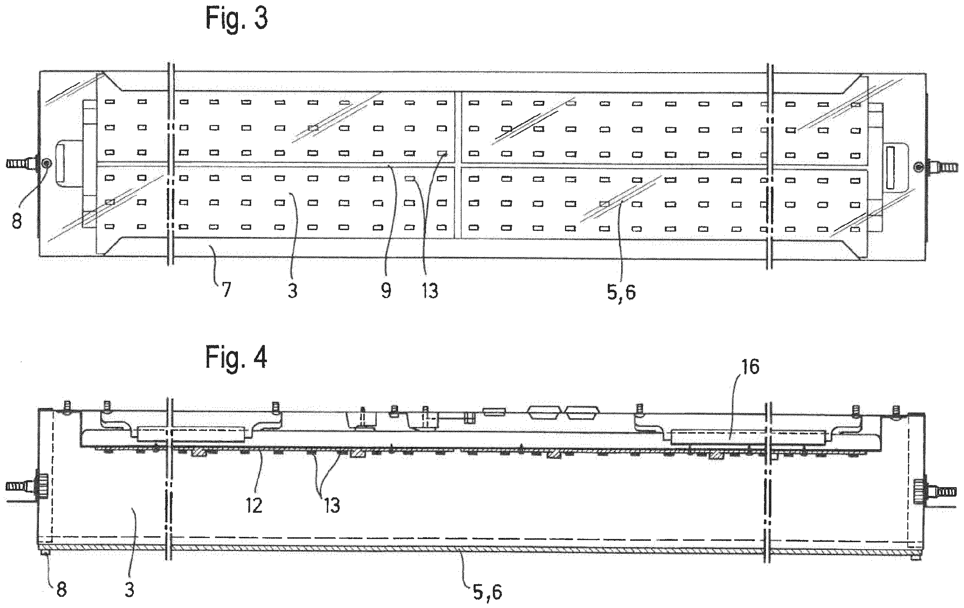

In Figur 3 ist eine Längsunteransicht der Deckenstrahlleuchte 1 gemäß den Figuren 1 und 2 dargestellt. Es ist erkennbar, dass die Unterseite der Deckenstrahlleuchte 1, welche die Abstrahlseite 4 darstellt, eine Scheibenabdeckung 5 bzw. Mikroprismenscheibe 6 aufweist, welche an ihren Längsrändern mittels einer Längsschiene 7 gehalten ist. Darüber hinaus ist die Scheibenabdeckung 5 durch eine Schraubenbefestigung 8 an beiden Stirnseiten arretiert, so dass ein leichter Zugang zu den Hochvolt-LED-Lichtquellen ausgeschlossen ist. In Figur 3 sind die einzelnen, in Reihen angeordneten LEDs 13 angedeutet, welche von der entsprechenden LED-Platine 12 (nicht gezeigt) getragen sind. In der Mitte ist ein Steg 9 angeordnet, welcher sich über die Länge der Deckenstrahlleuchte erstreckt und so ausgebildet ist, dass er für die Scheibenabdeckung 5 etwa mittig eine Längsunterstützung bildet. Bei eventuell aufschlagenden Bällen, beispielsweise beim Einsatz der Deckenstrahlleuchte in einer Sporthalle, erhält die Scheibenabdeckung 5 bzw. die Mikroprismenscheibe 6 dadurch noch eine zusätzliche Unterstützung, so dass die Splitterneigung noch weiter herabgesetzt wird. Vor allen Dingen ist die Splitterneigung auch deshalb extrem gering, weil die Mikroprismen innerhalb der Scheibenabdeckung so klein sind, dass in Verbindung mit dem an den Mikroprismen stark haftenden Basismaterial der Mikroprismenscheibe 6 eine Sollbruchbildung weitestgehend ausgeschlossen ist.

Die Deckenstrahlleuchte 1, wie sie gemäß den Figuren 1 und 2 aufgebaut und von ihrer Unterseite in Figur 3 dargestellt ist, ist in einer Längsschnittansicht in Figur 4 gezeigt. An der Unterseite, welche dem zu beheizenden Raum zugewandt ist, kapselt die Scheibenabdeckung 5 bzw. die Mikroprismenscheibe 6 das Leuchtengehäuse 3 komplett, so dass die im oberen Teil des Leuchtengehäuses 3 angeordnete LED-Platine 12, welche die LEDs 13 trägt, gegen äußeren Zugriff gesichert ist. Daher ist die Scheibenabdeckung 5 an den Stirnseiten der Deckenleuchte 1 bzw. an den an den Stirnseiten befindlichen Randabschnitten der Scheibenabdeckung 5 mittels jeweils einer Schraubenbefestigung 8 fixiert und arretiert. Ohne spezielles Werkzeug ist damit ein Zugriff ausgeschlossen.

Die erfindungsgemäßen Strahlflächenaufbauten weisen die an sich bekannten üblichen Deckenstrahlelemente auf, in welche Deckenstrahlleuchten integriert sind. Diese bekannten Deckenstrahlelemente weisen in Breitenrichtung mehrere Rohre eines Rohrregisters auf und dementsprechend mehrere die Zwischenräume zwischen den Rohren verbindende Strahlplatten auf. Einzelne derartige Abschnitte sind nun ausgeschnitten und weisen eine in die ausgeschnittenen Bereiche integrierte Deckenstrahlleuchte auf. Gleichwohl können die zwischen zwei benachbarten Rohren integrierten Deckenstrahlleuchten mit ihren Längsschienen 7 zumindest einen gewissen Anteil an Strahlungsenergie ebenfalls übertragen, weil diese Längsschienen wärmetechnisch mit den Rohren, durch welche das Heizmedium fließt, kontaktiert sind. Bezogen auf die Gesamtfläche der Scheibenabdeckung 5 ist diese Strahlfläche der Längsschiene zwar relativ klein, es wird aber dadurch zum einen die Haltefunktion für die Scheibenabdeckung 5 und andererseits eben als zusätzliches Strahlflächenelement eine Doppelfunktion realisiert.

### Bezugszeichenliste

- 1: Deckenstrahlleuchte
- 2: Hochvolt-LED-Lichtquelle
- 3: Leuchtengehäuse
- 4: Abstrahlseite
- 5: Scheibenabdeckung
- 6: Mikroprismenscheibe
- 7: Längsschiene
- 8: Schraubenbefestigung
- 9: Steg
- 10: Winkelhalterung
- 11: Heizrohr
- 12: LED-Platine
- 13: LED
- 14: Lüftungslöcher
- 15: Dicke Scheibenabdeckung
- 16: Elektronik Hochvolt-LED-Lichtquelle

## Patentansprüche

1. Strahlflächenaufbau mit von einem von einem Heizmedium durchströmten Rohrregister aus Heizrohren (11), die mit Strahlflächen verbunden sind, welche Strahlungsenergie über eine Abstrahlseite (4) in den zu beheizenden Raum abgeben,
**dadurch gekennzeichnet,**
- **dass** zur Beleuchtung des Raumes zumindest eine Deckenstrahlleuchte (1) in den Strahlflächenaufbau integriert ist, die eine Hochvolt-LED-Lichtquelle (2) in einem Leuchtengehäuse (3) enthält, dessen dem Raum zugewandte Abstrahlseite (4) durch eine lichtdurchlässige Scheibenabdeckung (5) gebildet ist;
- **dass** die Scheibenabdeckung (5) als Mikroprismenscheibe (6) ausgebildet ist, die das Licht der Hochvolt-LED-Lichtquelle (2) ohne Rastergitter blendfrei abstrahlt, und die Hochvolt-LED-Lichtquelle (2) gegen freien Zugriff im Leuchtengehäuse (3) gekapselt ist; und dass die Deckenstrahlleuchte zwischen Rohren (11) des Rohrregisters angeordnet ist.

2. Strahlflächenaufbau nach Anspruch 1, **dadurch gekennzeichnet, dass** die Scheibenabdeckung (5) eine Dicke im Bereich von 2 bis 4 mm aufweist.

3. Strahlflächenaufbau nach Anspruch 1 oder 2, **dadurch gekennzeichnet, dass** die Scheibenabdeckung (5) mittels einer längsseitigen Winkelschiene (7) und kopfseitigen Schraubenbefestigung (8) im Leuchtengehäuse (3) der Deckenstrahlleuchte (1) gehalten ist.

4. Strahlflächenaufbau nach einem der Ansprüche 1 bis 3, **dadurch gekennzeichnet, dass** die Mikroprismenscheibe (6) scharfkantige Mikrokristalle ohne Sollbruchstellen an deren Kanten enthält.

5. Strahlflächenaufbau nach einem der Ansprüche 1 bis 4, **dadurch gekennzeichnet, dass** die Hochvolt-LED-Lichtquelle (2) mit ihren LEDs in zumindest zwei Reihen nebeneinander angeordnet ist, wobei zwischen den LED-Reihen ein Steg (9) zur Stabilisierung der Scheibenabdeckung (5) angeordnet ist.

6. Strahlflächenaufbau nach einem der Ansprüche 1 bis 5, **dadurch gekennzeichnet, dass** die Deckenstrahlleuchte (1) einen vereinheitlichten Blendungsbewertungsfaktor (UGR) von < 22 aufweist.

7. Strahlflächenaufbau nach einem der Ansprüche 1 bis 6, **dadurch gekennzeichnet, dass** das Leuchtengehäuse (3) aus verzinktem Stahlblech besteht.
